# FASCICULE DE BREVET EUROPEEN

(11) **EP 0 567 368 B1**
(45) Date de publication et mention de la délivrance du brevet: **12.03.1997**
(21) Numéro de dépôt: 93400923.4
(22) Date de dépôt: 08.04.1993
(51) Int. Cl.: A01N 53/00, A01N 25/32

(54) **Nouvelles compositions pesticides renfermant un pyréthrinoide**
Neue pestizide Zusammensetzungen, welche ein Pyrethrinoid enthalten
New pesticidal compositions containing a pyrethrinoid

(30) Priorité: 09.04.1992 FR 9204347
(43) Date de publication de la demande: 27.10.1993
(73) Titulaire: ROUSSEL UCLAF, 93230 Romainville (FR)
(72) Inventeur: Audegond, Lilian, F-95880 Enghien Les Bains (FR); Lambert, Bernard, London W5 3RG (GB)
(74) Mandataire: Vieillefosse, Jean-Claude

(56) Documents cités:
- EP-A- 0 001 454
- CHEMICAL ABSTRACTS, vol. 112, no. 15, 9 Avril 1990, Columbus, Ohio, US; abstract no. 134506j, C.WATABE ET. AL. 'Pesticidal emulsions containing phenylxylylethane derivatives as stabilisers' page 282 ;

## Description

La présente invention concerne de nouvelles compositions pesticides renfermant un pyréthrinoïde.

L'invention a pour objet les compositions pesticides renfermant au moins un pyréthrinoïde et un solvant aromatique biphénylique.

Les compositions de l'invention peuvent renfermer un ou plusieurs pyréthrinoïdes ainsi que d'autres produits insecticides, comme des organo-phosphorés, des organo-chlorés, des carbamates, ainsi que d'autres produits acaricides, fongicides, herbicides.

Les compositions de l'invention peuvent renfermer en outre un ou plusieurs produits synergistes des pyréthrinoïdes comme le butoxyde de pypéronyle ou le produit MGK 264® par exemple.

Les pyréthrinoïdes sont largement utilisés dans le domaine agricole, pour lutter contre les parasites des végétaux et les parasites du sol, en hygiène publique et domestique, pour lutter notamment contre les parasites des locaux, des denrées stockées, du bois et du voisinage des habitations, ainsi qu'en traitement antiparasitaire chez l'homme et l'animal.

Les pyréthrinoïdes sont de plus en plus utilisés ; ils sont remarquablement efficaces et permettent surtout de lutter contre les parasites, tout en respectant l'environnement.

Toutefois, les pyréthrinoïdes présentent parfois l'inconvénient d'être irritants, ce qui peut rendre leur utilisation assez désagréable dans les locaux par exemple.

Les compositions de l'invention présentent un pouvoir irritant très inférieur à celui des compositions actuellement commercialisées, comme le montrent les résultats des tests détaillés ci-après, dans la partie expérimentale.

Les compositions de l'invention présentent également l'avantage de réduire fortement l'odeur désagréable due aux solvants aromatiques classiques utilisés, ce qui est naturellement très intéressant lors de l'utilisation en traitement spatial et résiduel dans la lutte contre les termites par exemple.

Les compositions de l'invention sont donc particulièrement adaptées à la réalisation de traitements résiduels contre les insectes volants, comme les mouches et les moustiques et les insectes rampants comme les cafards, les poux, les puces et les fourmis, ainsi que dans la lutte contre les parasites du bois.

Les compositions de l'invention s'utilisent également pour la destruction des insectes volants ou rampants mentionnés ci-dessus en traitement spatial à l'extérieur pour le traitement des espaces urbains, ainsi qu'en traitement spatial à l'intérieur des bâtiments ou habitations.

L'invention a plus particulièrement pour objet les compositions pesticides, caractérisées en ce que le solvant aromatique est un composé de formule (I) ou un mélange de composés de formule (I) 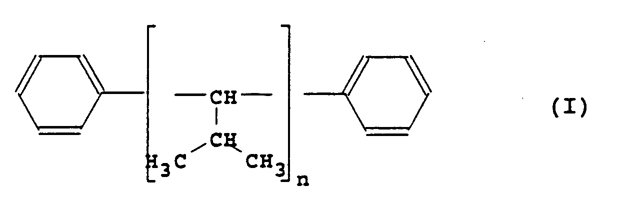 dans lesquels n représente le nombre 0 ou le nombre 1 et les radicaux phényles sont éventuellement substitués par un ou plusieurs radicaux alkyle renfermant jusqu'à 8 atomes de carbone.

Lorsque les radicaux phényles sont substitués par un ou plusieurs radicaux alkyle, il s'agit de préférence d'un ou plusieurs radicaux méthyle ou encore d'un ou plusieurs radicaux éthyle, n-propyle, isopropyle ou n-butyle, en position ortho, méta et/ou para sur les noyaux phényliques.

L'invention a plus particulièrement pour objet les compositions pesticides dans lesquelles le solvant aromatique est un solvant BVA XK ® ou un mélange de solvants BVA XK ®.

Les solvants BVA XK ® et notamment les solvants BVA XK₃®, BVA XK₂₀®, BVA XK₂₅®, BVA XK₂₉® et BVA XK ₃₂ sont des solvants renfermant des composés biphényliques ou des mélanges de composés biphényliques, commercialisés par la firme BVA OILS, 49640 Martin Dr., P.O. BOX 96042, WIXOM, MI 48096-6042 (USA).

L'invention a plus particulièrement pour objet les compositions pesticides dans lesquelles le solvant aromatique est un solvant BVA XK₃®.

L'invention a également pour objet les compositions définies précédemment dans lesquelles le solvant aromatique est un dibenzyltoluène, par exemple celles dans lesquelles le solvant aromatique est le MARLOTHERM.S® commercialisé par la firme EXXON Chemicals.

L'invention a notamment pour objet les compositions pesticides définies ci-dessus, caractérisées en ce qu'elles renferment en outre une huile végétale, minérale ou végétale transestérifiée.

L'huile végétale utilisée dans les compositions pesticides de l'invention peut être d'origine très variée, il s'agit par exemple d'une huile de coton, de paraffine, de tournesol, de soja, de colza ou de maïs, de préférence d'une huile de coton, ou encore de l'huile de colza méthylée.

Les pyréthrinoïdes utilisés sont des produits connus et largement décrits dans la littérature, il peut s'agir par exemple de produits tels que la perméthrine, la deltaméthrine, la tétraméthrine, la cyperméthrine et les différents mélanges d'isomères qui en sont issus, et notamment l'α-cyperméthrine et l'asyméthrine, l'esbiothrine, la kadéthrine, l'acrynathrine, la cyhalothrine et les différents mélanges d'isomères qui en sont issus, et en particulier la λ-cyhalothrine, la cyfluthrine, la tralométhrine, le fluvalinate, le fenvalérate, le S-fenvalérate ou le (1R,cis) 2,2-diméthyl 3-[(Z) 2-(méthoxycarbonyl) éthényl] cyclopropane carboxylate du (S) α-cyano 3-phénoxy benzyle.

Les compositions de l'invention peuvent renfermer n'importe quel pyréthrinoïde, mais sont naturellement d'un plus grand intérêt quand le ou les pyréthrinoïdes renfermés présentent un pouvoir irritant assez élevé pour être gênant pour l'utilisateur.

L'invention a plus particulièrement pour objet les compositions dans lesquelles le pyréthrinoïde est la deltaméthrine.

L'invention a plus particulièrement pour objet les compositions caractérisées en ce qu'elles renferment de 1 à 100 g/l de pyréthrinoïde.

Parmi les compositions de l'invention, on peut citer les compositions renfermant un pyréthrinoïde et de 300 à 900 g/l de solvant aromatique biphénylique.

L'invention a tout spécialement pour objet les compositions pesticides caractérisées en ce qu'elles renferment de 200 à 800 g/l d'huile végétale et de 300 à 500 g/l de solvant aromatique biphénylique.

Les compositions de l'invention peuvent se présenter sous les formes usuelles de l'industrie agrochimique ou de l'industrie vétérinaire quand il s'agit de lutter contre les parasites externes des animaux, insectes et acariens, à l'aide de bains, aérosols ou selon la méthode dite "pour on". Ils peuvent s'utiliser également dans des shampooings, lotions ou crèmes, pour lutter contre les poux chez l'homme par exemple.

L'invention a plus particulièrement pour objet les compositions présentées sous forme de concentrés émulsifiables ou solutions prêtes à l'emploi du type ULV ou des concentrés à diluer. Il est donné ci-après, à la suite de l'exemple 1, des exemples d'utilisation pratique de compositions de l'invention.

Parmi les compositions de l'invention, on peut citer tout spécialement les compositions caractérisées en ce qu'elles renferment en outre de 100 à 200 g/l de cyclohexanone ou autre solvant éventuel de type cétone ou éther de glycol, comme la N-méthyl pyrrolidone, la N-amylcétone ou l'éther méthylique du propylèneglycol.

Comme compositions préférées de l'invention, on peut citer les compositions caractérisées en ce qu'elles renferment de 12 à 18 g/l de deltaméthrine, notamment celles qui renferment de 250 à 350 g/l d'huile de coton et de 250 à 500 g/l de solvant BVA XK₃®. Parmi ces dernières, on peut citer celles qui renferment en outre de 0,1 à 10 g/l de BHT ou 2,6 bis (1,1-diméthyl) éthyl-4-méthylphénol, de 10 à 50 g/l de phénylsulfonate de calcium, de 10 à 20 g/l d'Emulsogen EL 360 ®, de 30 à 70 g/l d'Arkopal N 0 40 ®.

Les exemples suivants illustrent l'invention sans toutefois la limiter.

Exemple de compositions selon l'invention.

### EXEMPLE 1 : On a préparé des compositions renfermant

| MATIERES PREMIERES | EN G/L |
|---|---|
| Deltaméthrine technique | ≃ 15 |
| BHT ou 2,6-bis (1,1-diméthyl) éthyl-4-méthyl phénol | ≃ 1 |
| Phénylsulfonate de calcium | ≃ 30 |
| Emulsogen EL 360 ® (HOECHST) | ≃ 20 |
| Arkopal N 040 ® (HOECHST) | ≃ 50 |
| Cyclohexanone | ≃ 150 |
| Huile de coton | ≃ 300 |
| BVA XK₃ ® BVA oils | ≃ 388,59 |
| Acide acétique | ≃ 0,1 |

Les compositions ci-dessus s'utilisent diluées dans l'eau et s'appliquent à l'aide d'un pulvérisateur ; on peut par exemple diluer 100 cm³ de cette composition dans 5 litres d'eau. On peut ainsi traiter efficacement 100 m² de surface (traitement contre les insectes rampants).

Lorsque l'on veut traiter des surfaces contre les insectes volants, on peut diluer 65 cm³ de la composition décrite ci-dessus dans 5 litres d'eau.

Lorsque l'on veut effectuer des traitement spéciaux, on peut diluer 0,7 litre de la composition ci-dessus dans 8 à 10 litres de solvant pétrolier et appliquer la solution obtenue à raison de 0,5 litre de solution par hectare.

Lorsque l'on veut traiter des espaces intérieurs, on peut diluer de 0,5 litre à 1 litre de la composition décrite ci-dessus dans 3 à 5 litres de solvant pétrolier et appliquer 0,25 litre de solution ainsi obtenue pour traiter 1000 m³ d'espace intérieur.

### EXEMPLE 2 : On a préparé un concentré émulsifiable renfermant

| MATIERES PREMIERES | EN G/L |
|---|---|
| Tralométhrine | ≃ 144 |
| BHT | 1 |
| Phenylsulfonate de calcium | 35 |
| Emulsogen EL 360 ® | 35 |
| Arkopal N 040 ® | 31 |
| Cyclohexanone | 150 |
| Huile de coton | 300 |
| BVA XK₃ | 400 |
| Acide acétique | 0,1 |

### EXEMPLE 3 : On a préparé un concentré émulsifiable renfermant

| MATIERES PREMIERES | EN G/L |
|---|---|
| Cyalothrine | 15 |
| BHT | 1 |
| Phenylsulfonate de calcium | 35 |
| Emulsogen EL 360 | 35 |
| BVA XK₃® | ≃ 390 |
| Cyclohexanone | 150 |
| Huile de coton | 300 |

### EXEMPLE 4 : On a préparé un concentré émulsifiable renfermant

| MATIERES PREMIERES | EN G/L |
|---|---|
| Acrinathrine | 30,6 |
| BHT | 1 |
| Phenylsulfonate de calcium | 35 |
| Emulsogen EL 360 ® | 35 |
| BVA XK₃® | 403 |
| Cyclohexanone | 150 |
| Acide acétique | 0,1 |
| Huile de coton | 300 |

### EXEMPLE 5 : On a préparé un concentré émulsifiable renfermant

| MATIERES PREMIERES | EN G/L |
|---|---|
| Deltaméthrine | ≃ 15 |
| BHT | 1 |
| Acide acétique | 0,1 |
| Phenylsulfonate de calcium | 50 |
| Emulsogen EL 360 ® | 20 |
| BVA XK₃® | 730 |
| Cyclohexanone | 50 |

### EXEMPLE 6 : On a préparé un concentré émulsifiable renfermant

| MATIERES PREMIERES | EN G/L |
|---|---|
| Tralométhrine technique 98 % | 144 |
| BHT | 1 |
| Phénylsulfonate de calcium | 35 |
| Emulsogen EL 360 | 35 |
| Arkopal N 040 | |
| Cyclohexanone | |
| Huile de coton | |
| BVA XK3 | 755 |
| Acide acétique | 0,1 |

### EXEMPLE 7 : On a préparé un concentré émulsifiable renfermant

| MATIERES PREMIERES | EN G/L |
|---|---|
| Cyfluthrine | 15 |
| BHT | 1 |
| Phénylsulfonate de calcium | 35 |
| Emulsogen EL 360 | 35 |
| Cyclohexanone | 15 |
| Huile de coton | 300 |
| Acide acétique | 0,1 |

### EXEMPLE 8 : On a préparé un concentré émulsifiable renfermant

| MATIERES PREMIERES | EN G/L |
|---|---|
| Cyperméthrine | 65,900 |
| BHT | 1 |
| Phénylsulfonate de calcium | 30 |
| Emulsogen EL 360 | 20 |
| Arkopal N 040 | 50 |
| Cyclohexanone | 150 |
| Huile de coton | 300 |
| BVA XK3 | 37 |

### EXEMPLE 9 : On a préparé un concentré émulsifiable renfermant

| MATIERES PREMIERES | EN G/L |
|---|---|
| Perméthrine | 159,600 |
| BHT | 1 |
| Phénylsulfonate de calcium | 30 |
| Emulsogen EL 360 | 20 |
| Cyclohexanone | 150 |
| Huile de coton | 300 |
| BVA XK3 | 273 |

### EXEMPLES 10 à 14 :

On a préparé des compositions analogues à celle de l'exemple 1 dans lesquelles les 300 g d'huile de coton ont été remplacés par 300 g d'huile paraffinique blanche, 300 g d'huile de colza, 300 g d'huile de soja, 300 g d'huile de tournesol ou 300 g d'huile de colza méthylé.

### EXEMPLES 15 à 20 :

On a préparé des compositions analogues à celles des exemples 1 et 10 à 14 dans lesquelles la deltaméthrine a été remplacée par le (1R,cis) 2,2-diméthyl 3-[(Z) 2-(méthoxycarbonyl) éthényl] cyclopropane carboxylate de (S) α-cyano 3-phénoxy benzyle ou produit de l'exemple 1 du brevet français 2 480 748.

Etude de l'effet irritant des compositions de l'invention :

L'effet irritant des produits a été étudié chez des cobayes mâles pesant environ 300 g. Le test utilisé est un test d'inhalation.

La nébulisation des produits a été réalisée à l'aide d'un nébuliseur ultrasonique de type médical produisant un brouillard composé de particules de 0,5 à 5 microns.

Les compositions étudiées sont les suivantes :

Une composition renfermant 15 g/litre de deltaméthrine au sein du SOLVESSO, une composition renfermant 15 g/l de deltaméthrine dans le solvant BVA XK₃® (composition de l'exemple 5), une composition renfermant 15 g/l de deltaméthrine dans un mélange de solvants BVA XK₃ et d'huile de coton (composition de l'exemple 1).

Les cobayes sont placés individuellement dans une cage au travers de laquelle circule l'aérosol produit par le nébuliseur. On compte le nombre de toux en 5 minutes pour chaque cobaye. On calcule la moyenne des toux sur 6 animaux.

Les résultats obtenus exprimés en nombre de toux en 5 minutes sont les suivants :

### Test 1/ Deltaméthrine dans le Solvesso ®

| Nombre de toux en 5 mn | | | |
|---|---|---|---|
| mg de deltaméthrine/l | 18.75 | 37.5 | 75 |
| ml de formulation/l d'eau | 1.25 | 2.5 | 5.00 |
| 1 | 0.00 | 1.00 | 19.00 |
| 2 | 1.00 | 4.00 | 35.00 |
| 3 | 0.00 | 5.00 | 23.00 |
| 4 | 2.00 | 6.00 | 18.00 |
| 5 | 2.00 | 47.00 | 33.00 |
| 6 | 4.00 | 2.00 | 24.00 |
| 7 | | | |
| 8 Moyenne | 1.50 | 10.83 | 25.33 |
| 9 Ecart-type | 1.52 | 17.81 | 7.12 |
| 10 Vol. moyen nébulisé en ml | 7.00 | 7.00 | 4.00 |

### Test 2/ Deltaméthrine CE 15 dans le BVA composition de l'exemple 5

| Nombre de toux en 5 mn | | |
|---|---|---|
| mg de deltaméthrine/l | 75 | 150 |
| ml de formulation/l d'eau | 5 | 10 |
| 1 | 3.00 | 1.00 |
| 2 | 1.00 | 6.00 |
| 3 | 1.00 | 3.00 |
| 4 | 0.00 | 2.00 |
| 5 | 0.00 | 21.00 |
| 6 | 1.00 | 2.00 |
| 7 | | |
| 8 Moyenne | 1.00 | 5.83 |
| 9 Ecart-type | 1.10 | 7.63 |
| 10 Vol. moyen nébulisé en ml | 6.00 | 6.00 |

### Test 3/ Deltaméthrine CE 15 dans le BVA XK₃® + huile de coton Composition de l'exemple 1

| Nombre de toux en 5 mn | | |
|---|---|---|
| mg de deltaméthrine/l | 75 | 150 |
| ml de formulation/l d'eau | 5 | 10 |
| 1 | 0.00 | 0.00 |
| 2 | 0.00 | 4.00 |
| 3 | 0.00 | 2.00 |
| 4 | 1.00 | 0.00 |
| 5 | 3.00 | 0.00 |
| 6 | 0.00 | 2.00 |
| 7 | | |
| 8 Moyenne | 0.67 | 1.33 |
| 9 Ecart-type | 1.21 | 1.63 |
| 10 Vol. moyen nébulisé en ml | 6.00 | 6.00 |

Conclusion : Pour la même concentration en principe actif, (75 mg de deltaméthrine/l), les compositions de l'invention (essayées aux tests 2 et 3 ci-dessus) sont beaucoup moins irritantes que la composition essayée au test 1 (deltaméthrine dans Solvesso) 25 toux en 5 minutes pour cette dernière composition et 1 toux ou moins en 5 minutes pour les composition de l'invention.

Les compositions de l'invention sont beaucoup moins irritantes que les formulations dans le SOLVESSO.

A la dose de 150 mg/l, les compositions de l'exemple 1 sont nettement moins irritantes que les compositions de l'exemple 5. L'huile végétale renforce l'effet anti-irritant du solvant BVA XK₃®.

Les résultats obtenus sont résumés dans le graphique.

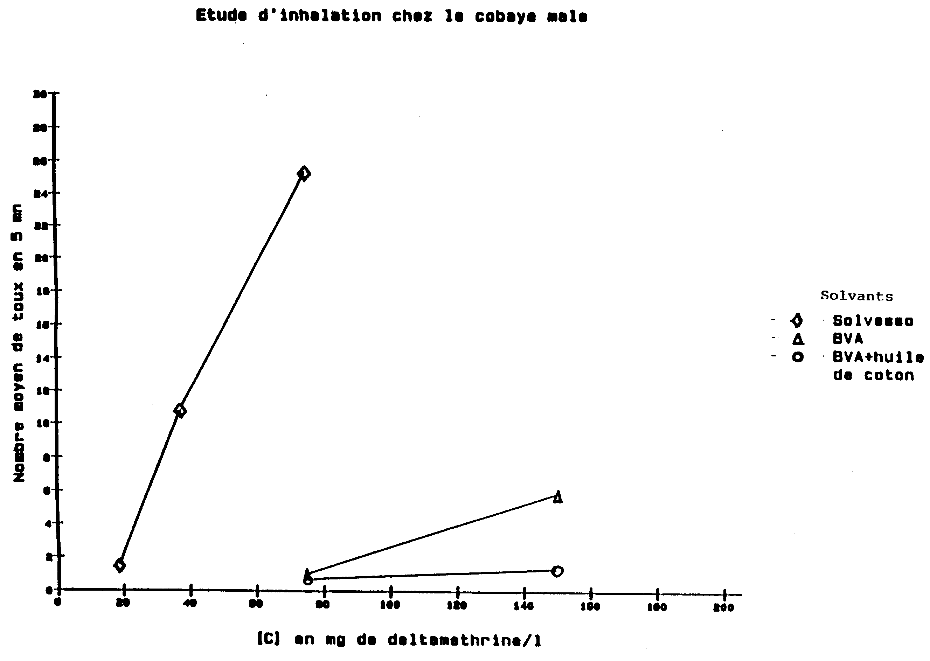

## Revendications

1. Les compositions pesticides renfermant au moins un pyréthrinoïde et un solvant aromatique biphénylique.

2. Les compositions pesticides définies à la revendication 1, caractérisées en ce que le solvant aromatique est un composé de formule (I) ou un mélange de composés de formule (I) 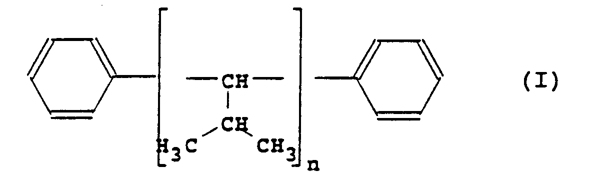 dans lesquels n représente le nombre 0 ou le nombre 1 et les radicaux phényles sont éventuellement substitués par un ou plusieurs radicaux alkyles renfermant jusqu'à 8 atomes de carbone.

3. Les compositions pesticides définies à la revendication 1, dans lesquelles le solvant aromatique est un dibenzyltoluène.

4. Les compositions pesticides selon l'une quelconque des revendications 1 à 3, caractérisées en ce qu'elles renferment en outre une huile végétale, minérale ou végétale transestérifiée.

5. Les compositions pesticides définies à la revendication 4 dans lesquelles l'huile végétale est une huile de coton, de paraffine, de tournesol, de soja, de colza ou de maïs, ou encore une huile de colza méthylée.

6. Les compositions pesticides selon la revendication 5, dans lesquelles l'huile végétale est une huile de coton.

7. Les compositions selon l'une quelconque des revendications 1 à 6 dans lesquelles le ou les pyréthrinoïdes utilisés sont choisis dans le groupe constitué par la perméthrine, la deltaméthrine, la tétraméthrine, la cyperméthrine et les différents mélanges d'isomères qui en sont issus, et notamment l'α-cyperméthrine et l'asyméthrine, l'esbiothrine, la kadéthrine, l'acrynathrine, la cyhalothrine et les différents mélanges d'isomères qui en sont issus, et en particulier la λ-cyhalothrine, la cyfluthrine, la tralométhrine, le fluvalinate, le fenvalérate, le S-fenvalérate ou le (1R,cis) 2,2-diméthyl 3-[(Z) 2-(méthoxycarbonyl) éthényl] cyclopropane carboxylate du (S) α-cyano 3-phénoxy benzyle.

8. Les compositions selon la revendication 7, dans lesquelles le pyréthrinoïde est la deltaméthrine.

9. Les compositions pesticides selon l'une quelconque des revendications 1 à 8, caractérisées en ce qu'elles renferment de 1 à 100 g/l de pyréthrinoïde.

10. Les compositions pesticides définies à l'une quelconque des revendications 1 à 3, caractérisées en ce qu'elles renferment de 300 à 900 g/l de solvant biphénylique.

11. Les compositions pesticides selon l'une quelconque des revendications 1 à 9, caractérisées en ce qu'elles renferment de 200 à 800 g/l d'huile végétale et de 300 à 500 g/l de solvant aromatique biphénylique.

12. Les compositions selon l'une quelconque des revendications 1 à 11, caractérisées en ce qu'elles sont présentées sous forme de concentré émulsifiable.

13. Les compositions pesticides définies à l'une quelconque des revendications 1 à 12, caractérisées en ce qu'elles renferment en outre de 100 à 200 g/l de cyclohexanone.

14. Les compositions selon l'une quelconque des revendications 1 à 13, caractérisées en ce qu'elles renferment de 12 à 18 g/l de deltaméthrine.

## Claims

1. The pesticide compositions containing at least one pyrethrinoid and one biphenyl aromatic solvent.

2. The pesticide compositions defined in claim 1, characterized in that the aromatic solvent is a compound of formula (I) or a mixture of compounds of formula (I): 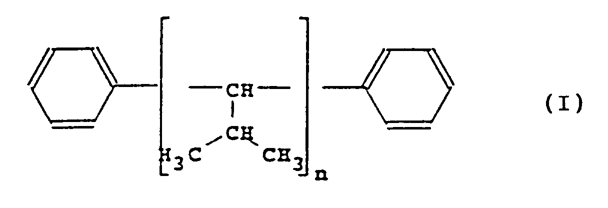 in which n represents the number 0 or the number 1 and the phenyl radicals are optionally substituted by one or more alkyl radicals containing up to 8 carbon atoms.

3. The pesticide compositions defined in claim 1, in which the aromatic solvent is a dibenzyltoluene.

4. The pesticide compositions according to any one of claims 1 to 3, characterized in that they contain in addition a vegetable, mineral or transesterified vegetable oil.

5. The pesticide compositions defined in claim 4 in which the vegetable oil is a cotton oil, paraffin oil, soya oil, rape oil or corn oil, or also a methylated rape oil.

6. The pesticide compositions according to claim 5, in which the vegetable oil is a cotton oil.

7. The compositions according to any one of claims 1 to 6 in which the pyrethrinoid or pyrethrinoids used are chosen from the group constituted by permethrin, deltamethrin, tetramethrin, cypermethrin and the various mixtures of isomers that result from them, and notably alpha-cypermethrin and asymethrin, esbiothrin, kadethrin, acrynathrin, cyhalothrin and the various mixtures of isomers that result from them, and especially λ-cyhalothrin, cyfluthrin, tralomethrin, fluvalinate, fenvalerate, S-fenvalerate or (S) alpha-cyano 3-phenoxy benzyl (1R,cis) 2,2-dimethyl 3-[(Z) 2-(methoxycarbonyl) ethenyl] cyclopropane carboxylate.

8. The compositions according to claim 7, in which the pyrethrinoid is deltamethrin.

9. The pesticide compositions according to any one of claims 1 to 8, characterized in that they contain 1 to 100 g/l of pyrethrinoid.

10. The pesticide compositions defined in any one of claims 1 to 3, characterized in that they contain 300 to 900 g/l of biphenyl solvent.

11. The pesticide compositions according to any one of claims 1 to 9, characterized in that they contain 200 to 800 g/l of vegetable oil and 300 to 500 g/l of biphenyl aromatic solvent.

12. The compositions according to any one of claims 1 to 11, characterized in that they are presented in the form of an emulsifiable concentrate.

13. The pesticide compositions defined in any one of claims 1 to 12, characterized in that they contain in addition 100 to 200 g/l of cyclohexanone.

14. The compositions according to any one of claims 1 to 13, characterized in that they contain 12 to 18 g/l of deltamethrin.

## Patentansprüche

1. Pestizidzusammensetzungen, umfassend mindestens ein Pyrethrinoid und ein aromatisches Biphenyllösungsmittel.

2. Pestizidzusammensetzungen nach Anspruch 1, dadurch **gekennzeichnet,** daß das aromatische Lösungsmittel eine Verbindung der Formel (I) oder ein Gemisch der Verbindungen der Formel (I) 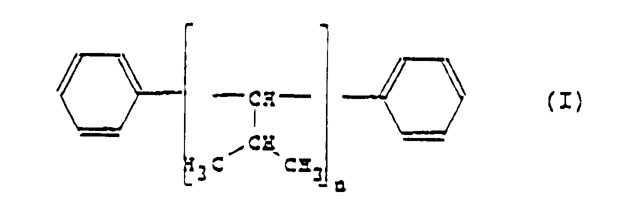 ist, worin n die Zahl 0 oder die Zahl 1 bedeutet, und die Phenylreste gegebenenfalls durch einen oder mehrere Alkylrest(e) mit bis zu 8 Kohlenstoffatomen substituiert sind.

3. Pestizidzusammensetzungen nach Anspruch 1, worin das aromatische Lösungsmittel ein Dibenzyltoluol ist.

4. Pestizidzusammensetzungen nach einem der Ansprüche 1 bis 3, dadurch **gekennzeichnet,** daß sie weiterhin ein pflanzliches, mineralisches oder umgeestertes pflanzliches Öl umfassen.

5. Pestizidzusammensetzungen nach Anspruch 4, worin das pflanzliche Öl ein Baumwollsaatöl, Paraffinöl, Sonnenblumenöl, Sojaöl, Rapsöl oder Maisöl oder auch ein methyliertes Rapsöl ist.

6. Pestizidzusammensetzungen nach Anspruch 5, worin das pflanzliche Öl ein Baumwollsaatöl ist.

7. Zusammensetzungen nach einem der Ansprüche 1 bis 6, worin das oder die verwendete(n) Pyrethrinoid(e) aus der Gruppe, bestehend aus Permethrin, Deltamethrin, Tetramethrin, Cypermethrin und den verschiedenen daraus hervorgehenden Isomerengemischen und insbesondere α-Cypermethrin und Asymethrin, Eshiothrin, Kadethrin, Acrynathrin, Cyhalotrin und den verschiedenen daraus hervorgehenden Isomerengemischen und ganz besonders λ-Cyhalothrin, Cyfluthrin, Tralomethrin, Fluvalinat, Fenvalerat, S-Fenvalerat oder (S)-α-Cyano-3-phenoxybenzyl-(1R,cis)-2,2,-dimethyl-3-[(Z)-2-(methoxycarbonyl)ethenyl]cylopropancarboxylat, ausgewählt ist/sind.

8. Zusammensetzungen nach Anspruch 7, worin das Pyrethrinoid Deltamethrin ist.

9. Pestizidzusammensetzungen nach einem der Ansprüche 1 bis 8, dadurch **gekennzeichnet,** daß sie 1 bis 100 g/l Pyrethrinoid umfassen.

10. Pestizidzusammensetzungen nach einem der Ansprüche 1 bis 3, dadurch **gekennzeichnet,** daß sie 300 bis 900 g/l Biphenyllösungsmittel umfassen.

11. Pestizidzusammensetzungen nach einem der Ansprüche 1 bis 9, dadurch **gekennzeichnet,** daß sie 200 bis 800 g/l pflanzliches Öl und 300 bis 500 g/l aromatisches Biphenyllösungsmittel umfassen.

12. Zusammensetzungen nach einem der Ansprüche 1 bis 11, dadurch **gekennzeichnet,** daß sie in Form eines emulgierbaren Konzentrats vorliegen.

13. Pestizidzusammensetzungen nach einem der Ansprüche 1 bis 12, dadurch **gekennzeichnet,** daß sie weiterhin 100 bis 200 g/l Cyclohexanon umfassen.

14. Zusammensetzungen nach einem der Ansprüche 1 bis 13, dadurch **gekennzeichnet,** daß sie 12 bis 18 g/l Deltamethrin umfassen.
